Europäisches Patentamt

European Patent Office

Office européen des brevets

(19)

(11) Veröffentlichungsnummer: **0 145 872**
**B1**

(12) **EUROPÄISCHE PATENTSCHRIFT**

(45) Veröffentlichungstag der Patentschrift:
**20.12.89**

(51) Int. Cl.⁴: **B 27 C 5/08**

(21) Anmeldenummer: **84111927.4**

(22) Anmeldetag: **05.10.84**

(54) **Fräsvorrichtung mit einer Hand-Oberfräse.**

(30) Priorität: **13.10.83 DE 3337265**

(43) Veröffentlichungstag der Anmeldung:
**26.06.85 Patentblatt 85/26**

(45) Bekanntmachung des Hinweises auf die Patenterteilung:
**20.12.89 Patentblatt 89/51**

(84) Benannte Vertragsstaaten:
**AT BE CH DE FR GB IT LI LU NL SE**

(56) Entgegenhaltungen:
**DE-A- 2 541 259**
**DE-B- 1 004 795**
**DE-C- 843 302**

(73) Patentinhaber: **Black & Decker Overseas AG,
Staedtle 36, FL-9490 Vaduz (LI)**

(72) Erfinder: **Bergler, Otto, Jahnstrasse 18/1,
D-7130 Mühlacker-Lomersheim (DE)**

(74) Vertreter: **Wilhelm, Hans-Herbert, Dr.-Ing. et al, Wilhelm
& Dauster Patentanwälte Hospitalstrasse 8,
D-7000 Stuttgart 1 (DE)**

**Beschreibung**

Die Erfindung betrifft eine Hand-Oberfräse nach dem Oberbegriff des Patentanspruches 1.

Eine Hand-Oberfräse dieser Art ist bekannt (DE-PS 2 421 954). Bei der bekannten Bauart kann vorgesehen werden, daß die Hand-Oberfräse mit ihrer Fußplatte von unten an einen Werkstücktisch angeschraubt wird. Der fliegend an dem Antriebsaggregat gelagerte Fräser kann dann durch den Werkstücktisch hindurch für die Bearbeitung von Werkstücken ausgenützt werden. Die Zustellung des Fräsers erfolgt durch Veränderung des Abstandes zwischen Antriebsaggregat und Fußplatte, wozu auch eine am Werkstücktisch und an dem Antriebsaggregat gelagerte Einstellspindel mit einem Handrad eingesetzt werden kann. Der Einsatz solcher bekannter Bauarten ist wegen der durch die fliegende Lagerung der Fräser bedingten relativ kurzen Fräserlänge begrenzt.

Aus der DE-C 843 302 ist eine Krümmlingsfräse mit einem von einem Elektromotor angetriebenen Profilfräser bekannt, bei der eine elektrische Handfräsmaschine mit einem Rahmen verbunden ist, der auch von Handfräse abragt und das freie Ende der Fräserwelle tragen kann. Am Rahmen sind Rollenpaare befestigt, die dazu dienen, eine Art vierrädrigen Wagen zu bilden, mit dessen Hilfe das Gerät und der mit diesem verbundene Fräser an dem zu bearbeitenden Werkstück entlanggeführt werden kann. Das Auswechseln des Fräsers gestaltet sich bei dieser Bauart sehr aufwendig.

Der Erfindung liegt die Aufgabe zugrunde, die Einsatzmöglichkeiten für Hand-Oberfräsen der eingangs genannten Art noch weiter dadurch zu verbessern, daß auch dort der Einsatz längerer spanabhebender Werkzeuge möglich ist, ohne daß die Handhabung zu aufwendig wird.

Diese Aufgabe wird bei einer Hand-Oberfräse der eingangs genannten Art durch die kennzeichnenden Merkmale des Patentanspruches 1 gelöst. Durch diese Ausgestaltung können mit Hand-Oberfräsen Bearbeitungsvorgänge vorgenommen werden, die bisher nur mit speziell ausgestalteten Hobelmaschinen möglich waren. Durch die neue Ausgestaltung ist es beispielsweise auch möglich, daß Profilhobelköpfe, wie sie beispielsweise in dem DE-GM 8 315 192 beschrieben sind, aber auch andere zylindrische Hobelköpfe mit verhältnismäßig großer Länge für die Bearbeitung von Werkstücken eingesetzt werden.

Die neue Hand-Oberfräse weist daher den Vorteil auf, daß die Profilierung von Leisten, Balken o. dgl. mit einer sehr einfachen Einrichtung möglich ist, die nicht nur in großen Werkstätten, sondern auch von Heimwerkern beschafft und eingesetzt werden kann. Dabei kann, ohne daß die Oberfräse z.B. von der Unterseite eines Werkstücktisches oder von einer anderen Führung gelöst werden muß, das Werkzeug, z.B. ein Hobelkopf, ausgewechselt werden.

Der am Gehäusedeckel befestigte Schenkel des U-Tragbügels wird vorteilhaft rahmenförmig ausgebildet, und zwar so, daß zwischen dem Antriebszapfen und dem inneren Rand des Schenkels des Tragbügels noch Platz zum Ausblasen der Kühlluft des Antriebsaggregates besteht. Bei dieser Ausgestaltung dient die Kühlluft gleichzeitig dazu, anfallende Späne aus dem Bereich des Werkzeuges wegzublasen.

Eine andere vorteilhafte Weiterbildung des Gegenstandes der Erfindung besteht darin, daß die Fußplatte der Oberfräse über eine Schwenkachse mit einer ortsfest am Werkstücktisch befestigten Halterung verbunden ist, die auch noch ein Schwenksegment zur Arretierung der verschwenkten Lage der Oberfräse aufweist. Es wird dadurch auch noch möglich, den Hobelkopf oder die Hobelwelle zusammen mit dem ganzen Oberfräsenaggregat unter einem Winkel zu der Führungsfläche für das Werkstück einzustellen, so daß Profilierungen verschiedener Art möglich sind und die Bearbeitung von Werkstücken durchgeführt werden kann, die bisher in so einfacher Weise nicht möglich war.

Die Arretierung der Schwenkanordnung kann über eine zur Schwenkachse parallele Welle erfolgen, die mit Klemmeinrichtungen in an sich bekannter Weise zum Anklemmen am Schwenksegment versehen ist.

Vorteilhaft ist es auch, wenn der Verbindungssteg des U-Tragbügels gleichzeitig als Schutzsteg für eine Werkzeugseite ausgebildet ist, so daß diese Ausführung den Vorteil aufweist, daß die nicht für die Bearbeitung eingesetzte Seite des Werkzeuges abgedeckt und geschützt ist, trotzdem aber in sehr einfacher Weise eine Ausrichtung der zweiten Lagerstelle zum Antriebsaggregat vorhanden ist. Der Schutzsteg kann zweckmäßig auf seiner Innenseite dem Umfang des maximal möglichen Werkstückdurchmessers angepaßt sein. Er kann das Werkzeug maximal bis zur Hälfte von dessen Umfang umgreifen. Als zweckmäßig hat es sich allerdings erwiesen, wenn der Schutzsteg nur etwa ein Drittel des Umfanges des Werkzeuges umgreift.

Schließlich ist es noch vorteilhaft, wenn an dem mit der Lagerstelle versehenen Schenkel des Stützlagerbockes eine verstellbare Pendelführung angebracht ist, welche die Anlage von Werkstücken unter verschiedenen Winkeln im Bereich des freien Endes des Stützlagerbockes ermöglicht. Die Pendelführung kann dabei aus einer um eine fest und konzentrisch zur Achse des Werkzeuges am Stützlagerbock angeordnete Lagerhülse schwenkbaren Halterung für eine Stellschraube und aus einem mit dieser Stellschraube relativ zu der Lagerhülse verstellbaren rahmenförmigen Schlitten mit einer Anlagefläche für das Werkstück bestehen. Die Bearbeitung halbrunder, runder oder gebogener Werkstücke zum Zweck von deren Profilierung ist dadurch möglich.

Die Erfindung ist anhand eines Ausführungsbeispieles dargestellt und wird in der folgenden Beschreibung erläutert. Es zeigen

Fig. 1 eine teilweise aufgeschnittene Seitenansicht einer neuen Fräsvorrichtung mit einer an der Unterseite eines Werktisches angebrachten Hand-Oberfräse, jedoch ohne Schwenkvorrichtung,

Fig. 2 die Fräsvorrichtung der Fig. 1, ebenfalls teilweise aufgeschnitten und ohne die Darstellung der Relativverstellung zwischen Fußplatte und Antriebsaggregat und

Fig. 3 die Draufsicht auf die Fräsvorrichtung der Fig. 1 und 2 in Richtung des Pfeiles III in Fig. 2 teilweise im Schnitt.

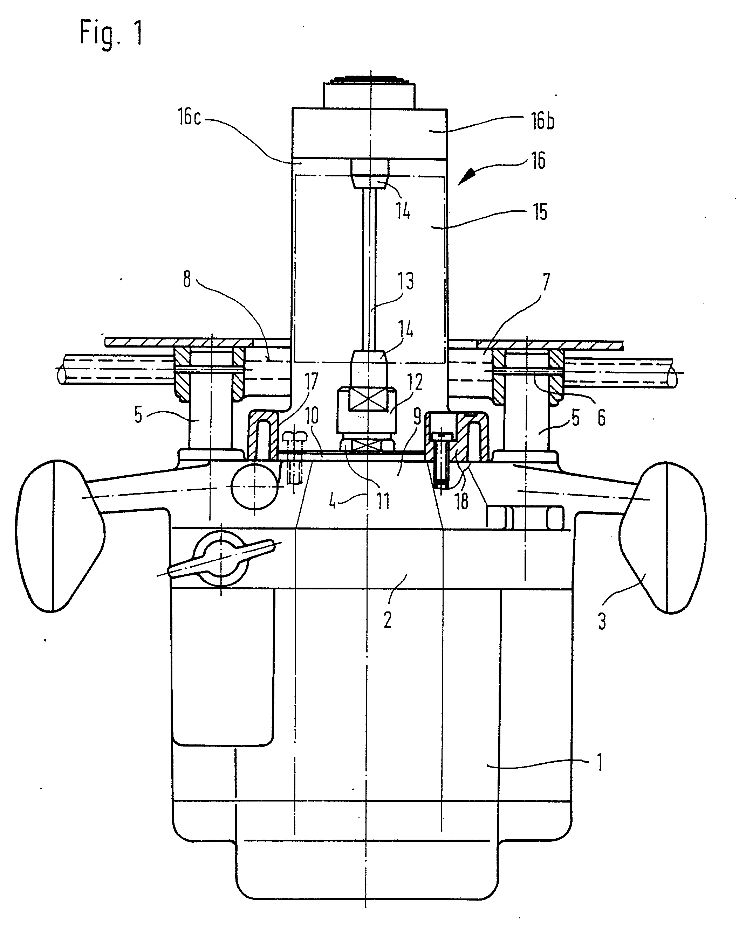

In den Fig. 1 bis 3 ist das Antriebsaggregat 1 einer bekannten Hand-Oberfräse zu erkennen, das in einer Führung 2 mit seitlichen Handgriffen 3 in Richtung der Antriebsachse 4 des Antriebsaggregates 1 an Säulen 5 verschiebbar gelagert ist, die fest, im Ausführungsbeispiel über Sicherungsstifte 6, in einer rahmenförmigen Fußplatte 7 eingesetzt sind. Die Fußplatte 7 ist mit zwei parallel zueinander verlaufenden Bohrungen 8 versehen, über die, wie noch erläutert werden wird, die Befestigung der Fußplatte 7 an einem stationär, beispielsweise an der Unterseite eines Arbeitstisches angeordneten Teil erfolgt.

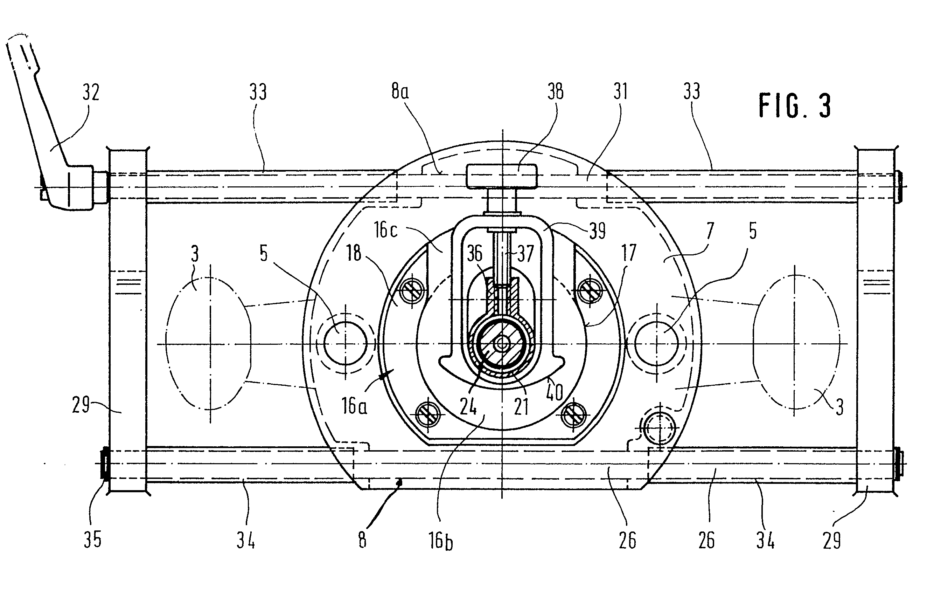

Das Gehäuse des Antriebsaggregates 1 der Oberfräse weist einen Gehäusedeckel 9 an der nach oben gerichteten Seite des Antriebsaggregates 1 auf, an dem auch die Handgriffe 3 befestigt sind. Dieser Gehäusedeckel 9 besitzt zum einen in bekannter Weise eine Öffnung, durch die der Antriebszapfen 11 für ein Werkzeug herausragt, der beim Ausführungsbeispiel mit einem Anschlußzapfen 12 für die drehfeste Verbindung mit einer Steckachse 13 ausgelegt ist, welche auf beiden Seiten mit konischen Zentrierteilen 14 versehen ist und zur Befestigung eines im einzelnen nicht dargestellten zylindrischen Hobelkopfes 15 dient. Um die Steckachse 13 nicht nur auf der Seite des Antriebszapfens 11, sondern auch auf der entgegengesetzten Seite lagern zu können, ist an dem Gehäusedeckel 9 des Antriebsaggregates 1 ein Stützlagerbock 16 angebracht, der aus einem U-förmigen Tragbügel besteht, dessen einer Schenkel 16a den Antriebszapfen 11 des Antriebsaggregats 1 rahmenförmig umgibt und, wie aus Fig. 3 ersichtlich ist, mit einer kreisförmigen Innenausnehmung 17 eine Zentrieraufnahme 10 umgibt, die kreisförmig und konzentrisch zu der Achse 4 des Antriebsaggregates 1 angeordnet ist. Die Ausnehmung 17 ist Teil des ringförmig ausgebildeten Rahmens 18, der den einen Schenkel 16a des U-förmigen Tragbügels 16 bildet. Der U-förmige Tragbügel 16 weist einen Stegteil auf, der sich etwa parallel zur Achse 4 von dem Schenkel 16a aus durch die rahmenförmige Fußplatte 7 hindurch zu dem zweiten Schenkel 16b des Tragbügels 16 erstreckt, der die zweite Lagerstelle 19 aufnimmt, die wiederum konzentrisch zur Achse 4, aber im Abstand zum Antriebszapfen 11 des Antriebsaggregats 1 angeordnet ist. Diese Lagerstelle 19 besteht aus einem innerhalb einer in einer Bohrung 20 im Schenkel 16b angeordneten Hülse 21 vorgesehenen Nadellager 22, in dem drehbar ein hohler Lagerzapfen 24 gehalten ist, durch den in Richtung des Pfeiles 25 die Steckachse 13 eingeschoben werden kann, sobald der entsprechende Hobelkopf 15 in seine Lage zwischen den beiden konischen Teilen 14 aufgenommen ist. Der etwa parallel zur Achse 4 verlaufende Steg 16c ist, wie aus Fig. 3 zu erkennen ist, mit einer etwa zylindrischen Außen- und Innenwand versehen, deren Durchmesser dem maximalen Durchmesser eines Fräs- oder Hobelwerkzeuges 15 angepaßt ist. Der Steg 16c dient daher als Schutzsteg für das Werkzeug 15.

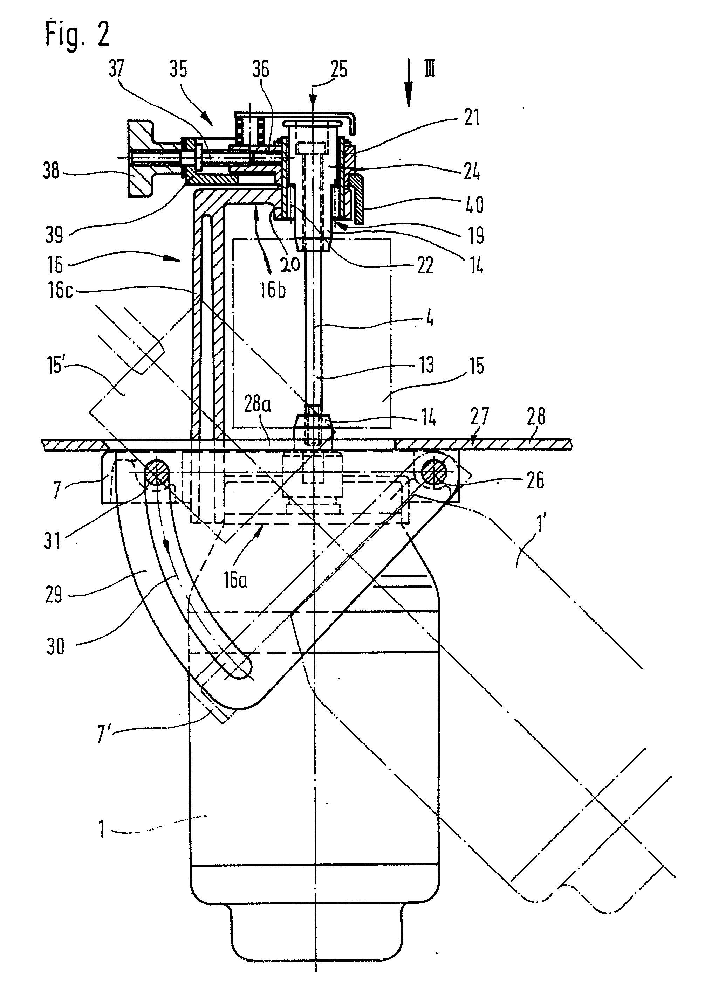

Wie aus den Fig. 2 und 3 deutlich erkennbar ist, ist die Fußplatte 7 der Oberfräse über eine Stange 26, die als Schwenkachse dient, schwenkbar mit einer Halterung 27 verbunden, die aus einer Befestigungsplatte 28 und aus zwei fest mit dieser Befestigungsplatte 28 verbundenen Schwenksegmenten 29 besteht, die beide mit einer um die Achse der Schwenkachse 26 kreisbogenförmig verlaufenden Kulissenausnehmung 30 versehen sind. In dieser Kulissenausnehmung wird eine zweite Welle 31 geführt, die durch eine parallel zu der vorher erwähnten Bohrung 8 in der Fußplatte 7 verlaufende Bohrung 8a geführt und an mindestens einem ihrer Enden mit einem Gewinde versehen ist, auf das mit einem Gegengewinde ein Klemmhebel 32 aufgesetzt ist. Zwischen den parallel zueinander verlaufenden und seitlich an der Platte 28 angeordneten Schwenksegmenten 29 verlaufen jeweils Hülsen 33 bzw. 34, die zur Sicherung der Schwenkachse 26 bzw. zur Ausübung der Klemmwirkung durch die Klemmachse 31 dienen. Die Schwenkachse 26 ist durch bekannte Axialsicherungen in der Form von Seegerringen 35 außen an den Schwenksegmenten 29 gesichert. Die Klemmachse 31 ist auf der vom Klemmhebel 32 abgewandten Seite natürlich ebenfalls axial an dem Schwenksegment 29 gehalten.

Wie aus Fig. 2 erkennbar ist, ist es durch die Lagerung der Fußplatte 7 an der Halterung 27 möglich, die gesamte Oberfräse aus ihrer Ursprungslage zu kippen, so daß sie die Endlage 1' einnimmt, in der der Hobelkopf 15' eine Schräglage zu der Oberseite der Platte 28 einnimmt. Diese Platte 28, die natürlich mit einer Ausnehmung zum Durchtritt des Stützlagerbockes 16 und des Hobelkopfes 15 aufweist, die mit 28a bezeichnet ist, kann beispielsweise an der Unterseite eines Werkstücktisches befestigt werden, der ebenfalls mit einer korrespondierenden Durchtrittsöffnung ausgerüstet ist. Das Werkzeug 15 ragt dann über die Oberfläche des Werkstücktisches nach oben. Es kann gegenüber einem auf der Werkstücktischfläche aufliegenden Werkstück, beispielsweise einem zu profilierenden Balken durch die Verstellmöglichkeit der Oberfräse an den Säulen 5 in die gewünschte Lage einjustiert werden, was in bekannter Weise beispielsweise durch eine mit der Platte 28 und mit dem Antriebsaggregat 1 verbundene Einstellspindel geschehen kann. Nach Einstellung der Relativlage zwischen Werkzeug 15 und Werkstück kann in bekannter Weise die Lage der Oberfräse an den Säulen gesichert werden, so daß auch die Lage des Werkzeuges gegenüber dem Werkstück festliegt. Das Werkstück, beispielsweise ein Balken oder eine Leiste kann dann am Werkzeug vorbeigeschoben werden, wobei die Möglichkeit besteht – die ebenfalls bekannt ist – daß beidseitig von dem Stützlagerbock 16 eine senkrecht von der Werkstückauflagefläche aufstehende Anschlagfläche vorgesehen wird. Es ist natürlich auch möglich, ohne eine solche Anschlagfläche zu arbeiten, wenn beispielsweise gebogene Werkstücke bearbeitet werden sollen.

Zu diesem Zweck ist an dem oberen Schenkel 16b des Stützlagerbockes 16 eine sogenannte Pendelführung 35 vorgesehen, die aus einer um die Lagerhülse 21 schwenkbar angeordneten Halterung 36 für eine Stellschraube 37 besteht, die mit Hilfe eines Handknopfes 38 verdreht werden kann. Die Stellschraube 37 ist ihrerseits drehbar in einem Schlitten 39 gehalten, der rahmenförmig ausgebildet ist und an seinem von dem Handknopf 38 abgewandten Ende mit einer Anlagefläche 40 für das nicht dargestellte Werkstück versehen ist.

Die Oberfräse läßt sich durch die Anordnung des Stützlagerbockes 16 auch zur Anordnung von länglichen Werkzeugen, wie Hobelköpfen, Hobelwellen o. dgl. ausnützen, die bisher nicht mit solchen Antriebsaggregaten verwendet werden konnten. Bei der neuen Fräsvorrichtung wird die bei Oberfräsen bisher vorgesehene fliegende Lagerung von Werkzeugen durch eine beidseitige Lagerung ersetzt, die den Einsatz anderer Werkzeuge ermöglicht. Diese Werkzeuge können in einfacher Weise durch die Anordnung einer Steckachse eingesetzt und ausgetauscht werden.

**Patentansprüche**

1. Hand-Oberfräse, die mit einer mit parallelen Säulen versehenen rahmenförmigen Fußplatte und einem an den Säulen relativ zur Fußplatte verstellbaren Antriebsaggregat mit einem aus einem stirnseitigen Gehäusedeckel herausragenden Antriebszapfen für ein Werkzeug ausgerüstet ist, wobei die Fußplatte mit einer Öffnung zum Durchtritt des Werkzeuges versehen ist, dadurch gekennzeichnet, daß an dem Gehäusedeckel (9) ein als durch die Fußplatte (7) hindurchgehender U-förmiger Tragbügel ausgebildeter Stützlagerbock (16) angebracht ist, dessen einer Schenkel (16a) den Antriebszapfen (11) des Antriebsaggregates umgibt und an einer Zentrieraufnahme (10) am Gehäusedeckel (9) befestigt ist und dessen anderer Schenkel (16b) eine auf der Achse (4) des Antriebszapfens (11) gelegene, aber im Abstand zu diesem angeordnete zweite Lagerstelle (19) für eine in der Art eines Hobelkopfes ausgebildetes Werkzeug (15) aufnimmt, die aus einem Wälzlager (22) mit einem hohlen Lagerzapfen (24) besteht, durch den eine Steckwelle (13) zur Befestigung des Werkzeuges (15) geführt ist, und daß der Antriebszapfen (11) für das Werkzeug (15) einen Anschlußteil (12) zur drehfesten Verbindung mit der Steckwelle (13) aufweist.

2. Hand-Oberfräse nach Anspruch 1, dadurch gekennzeichnet, daß der am Gehäusedeckel (9) befestigte Schenkel (16a) des Tragbügels rahmenförmig ausgebildet ist und daß zwischen Antriebszapfen (11) und innerem Schenkelrand (17) Platz zum Ausblasen der Kühlluft des Antriebsaggregates (1) besteht.

3. Hand-Oberfräse nach Anspruch 1 oder 2, dadurch gekennzeichnet, daß die Fußplatte (7) der Oberfräse über eine Schwenkachse (26) mit einer ortsfest befestigbaren Halterung (27) verbunden ist, die Schwenksegmente (29) zur Arretierung der Schwenklage der Oberfräse aufweist.

4. Hand-Oberfräse nach Anspruch 3, dadurch gekennzeichnet, daß die Arretierung über eine zur Schwenkachse (26) parallele Welle (31) erfolgt, die mit Klemmeinrichtungen (32) zum Klemmen am Schwenksegment (29) versehen ist.

5. Hand-Oberfräse nach den Ansprüchen 1 und 2, dadurch gekennzeichnet, daß der Verbindungssteg (16c) des Tragbügels als Schutzsteg für eine Seite des Werkzeuges (15) ausgebildet und auf seiner Innenseite dem Umfang des maximal möglichen Werkzeugdurchmessers angepaßt ist und das Werkzeug maximal bis zur Hälfte dessen Umfanges umgreift.

6. Hand-Oberfräse nach Anspruch 1, dadurch gekennzeichnet, daß an dem mit der Lagerstelle (19) versehenen Schenkel (16b) des Stützlagerbockes (16) eine verstellbare Pendelführung angebracht ist, die aus einer um eine fest und konzentrisch zur Achse (4) des Werkzeuges (15) am Stützlagerbock (16) angeordnete Lagerhülse (21) verschwenkbaren Halterung (36) für eine Stellschraube (37) und aus einem mit dieser Stellschraube relativ zur Lagerhülse (21) verstellbaren rahmenförmigen Schlitten (39) mit einer Anlagefläche (40) für das Werkstück besteht.

**Claims**

1. Hand routing machine equipped with a frame-like footplate which has parallel columns and, adjustable on the columns and relatively to the footplate, a power unit with a drive arbor protruding from a cover at the front of the housing and intended to drive a tool, the footplate being provided with an aperture through which the tool can pass, characterised in that mounted on the housing cover (9) and constructed as a U-shaped supporting bracket (16) adapted to pass through the footplate (7) there is a supporting bearing block (16) of which one arm (16a) passes around the drive arbor (11) of the power unit and is fixed on a centring recess (10) on the housing cover (9) while its other arm (16b) accommodates a second bearing station (19) situated on the axis (4) of the drive arbor (11) but in a position which is spaced therefrom, and which is intended for a tool (15) constructed in the manner of a plane head and consisting of a rolling bearing (22) with a hollow bearing journal (24) through which passes a shaft (13) for attachment of the tool (15) and in that the drive journal (11) for the tool (15) has a connection part (12) for rotationally rigid connection to the shaft (13).

2. Hand routing machine according to Claim 1, characterised in that the arm (16a) of the supporting bracket which is fixed on the housing cover (9) is of a frame-like shape and in that between the drive arbour (11) and the inner edge (17) of the arm there is space for blowing out the cooling air for the power unit (1).

3. Hand routing machine according to Claim 1 or 2, characterised in that the footplate (7) of the routing machine is connected by a pivot spindle (26) to a rigidly mountable support (27) which comprises pivot segments (29) for locking the pivoted position of the routing machine.

4. Hand routing machine according to Claim 3, characterised in that locking takes place via a shaft (31) parallel with the pivot spindle (26) and provided with clamping means (32) for clamping on the pivot segment (29).

5. Hand routing machine according to Claims 1 and 2, characterised in that the connecting web (16c) of the supporting bracket is constructed as a protection for one side of the tool (15), its inside face being adapted to the periphery of the maximum possible tool diameter and engaging around the tool by at most one half of its periphery.

6. Hand routing machine according to Claim 1, characterised in that on the arm (16b) of the supporting bearing block (16) which is provided with the bearing station (19) there is an adjustable self-aligning guide which consists of a holder (36) adapted to pivot about a bearing sleeve (21) disposed on the supporting bearing block (16) rigidly and concentrically of the axis (4) of the tool (15), the holder (36) being intended for a set screw (37), the guide further consisting of a frame-like slide (39) having a workpiece support surface (40) and being adjustable by means of the set screw and in relation to the bearing sleeve (21).

**Revendications**

1. Défonceuse à main, qui est équipée d'une plaque de pied en forme de cadre pourvue de colonnes parallèles et d'un groupe d'entraînement réglable sur les colonnes, par rapport à la plaque de pied, muni d'un tourillon d'entraînement d'outil émergeant d'un couvercle frontal de carter, la plaque de pied étant pourvue d'un orifice de passage de l'outil, caractérisée en ce qu'un bloc de palier support (16) réalisé sous la forme d'un étrier support en forme de U passant à travers la plaque de pied (7) est monté sur le couvercle du carter (9), bloc de palier support (16) dont une branche (16a) entoure le tourillon d'entraînement (11) du groupe d'entraînement et qui est fixé sur un logement de centrage (10) situé sur le couvercle de carter (9) et dont l'autre branche (16b) reçoit un deuxième point d'appui (19) placé sur l'axe (4) du tourillon d'entraînement (11), mais à distance de ce dernier, et destiné à un outil (15) réalisé sous la forme d'une tête de rabot, se composant d'un palier à roulement (22) avec un tourillon de palier creux (24), à travers lequel est guidé un arbre à enfichage (13) destiné à la fixation de l'outil (15), et en ce que le tourillon d'entraînement (11) présente pour l'outil (15) une partie de raccordement (12) destinée à constituer une liaison à rotation avec l'arbre à enfichage (13).

2. Défonceuse à main selon la revendication 1, caractérisée en ce que la branche (16a), fixée sur le couvercle de carter (9), de l'étrier support est réalisée en forme de cadre et en ce qu'entre le tourillon d'entraînement (11) et le bord intérieur de la branche (17), il y a place pour éjecter l'air de refroidissement du groupe d'entraînement (1).

3. Défonceuse à main selon la revendication 1 ou 2, caractérisée en ce que la plaque de pied (7) de la défonceuse est reliée par l'intermédiaire d'un axe de pivotement (26) comportant une possibilité de fixation (27) locale, présentant les segments pivotants (29) afin de bloquer la position de pivotement.

4. Défonceuse à main selon la revendication 3, caractérisée en ce que le blocage s'effectue par l'intermédiaire d'un arbre (31) parallèle à l'axe de pivotement (26) et pourvu de dispositif de blocage (32) pour réaliser un blocage sur le segment pivotant (29).

5. Défonceuse à main selon les revendications 1 et 2, caractérisée en ce que la nervure de liaison (16c) de l'étrier support est réalisée sous la forme d'une nervure de protection pour une face de l'outil (15) et est ajustée à la face intérieure à la circonférence du diamètre d'outil maximum possible, en entourant l'outil au maximum jusqu'à la moitié de sa circonférence.

6. Défonceuse à main selon la revendication 1, caractérisée en ce qu'un guidage pendulaire réglable est adjoint à la branche (16b) du bloc de palier support qui est pourvue du point d'appui (19) et se compose d'une fixation (36) destinée à une vis de réglage et pivotante sur une douille de palier (21), disposée sur le bloc de palier support (16), rigidement et concentriquement par rapport à l'axe (4) de l'outil (15) et d'un coulisseau (39) en forme de cadre qui est réglable par rapport à la douille de palier (21) à l'aide de cette vis de réglage et qui comporte une surface d'appui (40) pour la pièce à usiner.

Fig. 1

Fig. 2

FIG. 3